# EUROPEAN PATENT APPLICATION

(11) **EP 4 794 108 A1**
(43) Date of publication of application: **19.08.2026**
(21) Application number: 24876225.4
(22) Date of filing: 09.08.2024
(51) Int. Cl.: H01M 50/543, H01M 50/569, H01M 50/588

(54) **BUSBAR, BATTERY PACK, AND VEHICLE**

(30) Priority: 10.10.2023 CN 202311310120
(71) Applicant: BYD Company Limited, Shenzhen, Guangdong 518118 (CN)
(72) Inventor: WANG, Ning, Shenzhen, Guangdong 518118 (CN); LIU, Yongjun, Shenzhen, Guangdong 518118 (CN); LI, Liangliang, Shenzhen, Guangdong 518118 (CN); BAO, Yuhuan, Shenzhen, Guangdong 518118 (CN); WANG, Shuai, Shenzhen, Guangdong 518118 (CN)
(74) Representative: Mathys & Squire
(86) International application number: PCT/CN2024/111147
(87) International publication number: WO 2025/077405

(57) **Abstract**

A vehicle (1) having a battery pack (10), the battery pack (10) having a busbar (200). The busbar (200) comprises: a non-conductive sealing pressing plate (2003), a first connecting component (2001), and a second connecting component (2002). The first connecting component (2001) is disposed at a first end of the non-conductive sealing pressing plate (2003), and the second connecting component (2002) is disposed at a second end of the non-conductive sealing pressing plate (2003), the first connecting component (2001) being electrically connected to the second connecting component (2002).

## Description

### CROSS-REFERENCE TO RELATED APPLICATIONS

This application claims priority to Chinese Patent Application No. 202311310120.7, filed on October 10, 2023 and entitled "BUSBAR, BATTERY PACK, AND VEHICLE", which is incorporated herein by reference in its entirety for all purposes.

### TECHNICAL FIELD

This application relates to the field of batteries, and more specifically, to a busbar, a battery pack, and a vehicle.

### BACKGROUND

When thermal runaway occurs in a battery of an electric vehicle, electrolyte and high-temperature mixed gases enter a power distribution cavity, which causes arcing and short circuiting and may further trigger more severe safety incidents. In a battery system with thermal and electrical separation provided in related technologies, a related assembly is added to a battery cell to prevent the electrolyte from being ejected into the power distribution cavity. However, the system cannot prevent the high-temperature mixed gases from flowing into the power distribution cavity.

Therefore, how to prevent the electrolyte and the high-temperature mixed gases from entering the power distribution cavity after thermal runaway is a technical problem that urgently needs to be resolved.

### SUMMARY

The present invention is provided to resolve at least one of the foregoing problems. According to a first aspect of this application, a busbar is provided. The busbar includes a non-conductive sealing pressing plate, a first connecting component, and a second connecting component. The first connecting component is disposed at a first end of the non-conductive sealing pressing plate, and the second connecting component is disposed at a second end of the non-conductive sealing pressing plate. The first connecting component is electrically connected to the second connecting component.

In an embodiment of this application, the busbar further includes a temperature detection module. The temperature detection module is fixedly connected to the second connecting component and is configured to be connected to a battery management apparatus, for detecting a temperature of the busbar to obtain a detection temperature. The battery management apparatus is configured to receive the detection temperature to generate a warning signal when the detection temperature exceeds a preset temperature.

In an embodiment of this application, a material of the first connecting component includes aluminum, a material of the second connecting component includes copper, and the non-conductive sealing pressing plate is one of a ceramic insulating plate, a modified engineering plastic plate, or a glass fiber reinforced engineering plastic plate.

In an embodiment of this application, a middle part of the first connecting component is bent to be V-shaped.

In an embodiment of this application, the non-conductive sealing pressing plate includes a pressing plate end portion and a pressing plate main body. The pressing plate end portion extends through the pressing plate main body, and the pressing plate end portion protrudes outward from the pressing plate main body. The pressing plate end portion wraps a junction between the first connecting component and the second connecting component.

According to a second aspect of this application, a battery pack is provided. The battery pack includes a box, a battery cell module, a power distribution box, and any foregoing busbar.

The box includes an edge beam, and the edge beam is provided with a through connection hole. The battery cell module is disposed in the box. The busbar passes through the connection hole. One end of the busbar is electrically connected to the battery cell module, and the other end of the busbar is electrically connected to the power distribution box. The non-conductive sealing pressing plate is hermetically connected to the edge beam.

In an embodiment of this application, the battery pack further includes a power distribution housing and a first seal cover. The power distribution housing includes a plurality of side plates, and the plurality of side plates enclose to form a first cavity with two opposite openings. The opening on one side of the power distribution housing is hermetically connected to the edge beam having the connection hole. The first seal cover is hermetically connected to the opening on the other side of the power distribution housing. The power distribution box is disposed in the power distribution housing.

In an embodiment of this application, the pack further includes a second seal cover. The edge beam having the connection hole is provided with a second cavity, and the connection hole is provided on one side of the second cavity. The power distribution box is disposed in the second cavity, and the second seal cover is hermetically connected to a side of the second cavity that has an opening.

In an embodiment of this application, the non-conductive sealing pressing plate includes a pressing plate end portion and a pressing plate main body. A surface of the pressing plate end portion is hermetically connected to a surface of the connection hole, and a sealing surface of the pressing plate main body is hermetically connected to one side of the edge beam.

According to a third aspect of this application, a vehicle is provided, and the vehicle includes any foregoing battery pack.

According to the busbar, the battery pack, and the vehicle provided in this embodiment of this application, the busbar of this application can isolate, by means of the non-conductive sealing pressing plate, components connected at two ends of the busbar. The battery pack connects the battery cell module to the power distribution box by using the busbar, and the busbar is hermetically connected to the box. In this way, in case of battery thermal runaway, electrolyte and high-temperature mixed gases can be prevented from entering the power distribution box, thereby avoiding safety problems such as short circuits in the power distribution box.

### BRIEF DESCRIPTION OF DRAWINGS

To describe the technical solutions in the embodiments of the present invention more clearly, the following briefly describes the accompanying drawings needed for use in the description of the embodiments. Clearly, the accompanying drawings in the following description are merely some embodiments of the present invention, and a person of ordinary skill in the art may still obtain other accompanying drawings from these accompanying drawings without making creative efforts.
FIG. 1 is a schematic diagram of a structure of a busbar according to an embodiment of the present invention;
FIG. 2 is a schematic diagram of a structure of a battery pack according to an embodiment of the present invention;
FIG. 3 is a schematic structural diagram of a battery pack in a disassembled state according to an embodiment of the present invention;
FIG. 4 is a schematic structural diagram of a battery pack in an assembled state according to an embodiment of the present invention;
FIG. 5 is a partial enlarged schematic view of assembly of a busbar and a first edge beam according to an embodiment of the present invention;
FIG. 6 is a partial enlarged schematic view in which a busbar is connected to a battery main body by using a connecting sheet according to an embodiment of the present invention; and
FIG. 7 is a schematic diagram of a structure of a vehicle according to an embodiment of the present invention.

### DESCRIPTION OF EMBODIMENTS

To make the objectives, technical solutions, and advantages of the present invention more apparent, the following describes example embodiments according to the present invention in detail with reference to the accompanying drawings. Clearly, the described embodiments are merely some rather than all embodiments of the present invention. It will be understood that the present invention is not limited to the example embodiments described herein. Based on the embodiments of the present invention described in the present invention, all other embodiments obtained by a person skilled in the art without making creative efforts should fall within the protection scope of the present invention.

In the following description, a large quantity of specific details are provided to provide a more thorough understanding of the present invention. However, for a person skilled in the art, it is clear that the present invention can be implemented without the need for one or more of these details. In other examples, to avoid confusion with the present invention, some technical features well-known in the art are not described.

It will be understood that the present invention can be implemented in different forms and will not be construed as being limited to the embodiments provided herein. Instead, providing these embodiments renders the disclosure thorough and complete, and fully conveys the scope of the present invention to a person skilled in the art.

For a thorough understanding of the present invention, detailed structures are provided in the following descriptions to illustrate the technical solutions provided in the present invention. Optional embodiments of the present invention are described in detail as follows. However, in addition to these detailed descriptions, the present invention may have other implementations.

Some implementations of the present invention are described in detail below with reference to the accompanying drawings. In the case of no conflict, the following embodiments and features in the embodiments may be mutually combined.

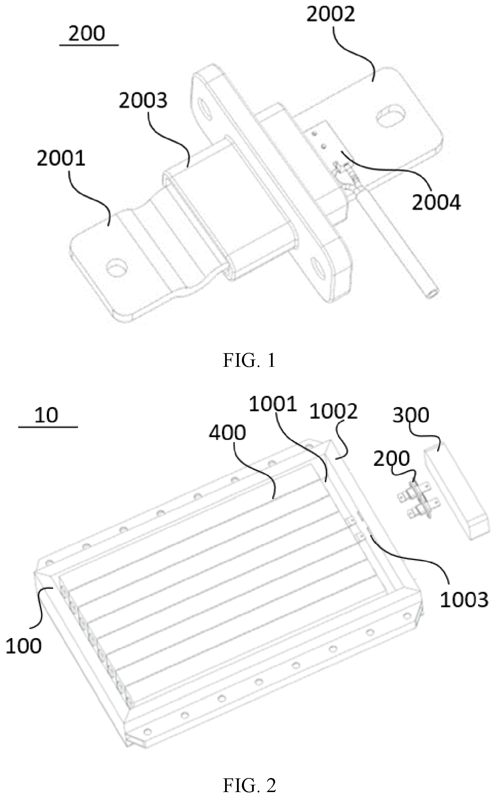

This application provides a battery pack. As shown in FIG. 2, a battery pack 10 includes a box 100, a busbar 200, a power distribution box 300, and a battery cell module 400.

The box 100 includes an edge beam 1002, and the edge beam 1002 is provided with a through connection hole 1003.

As an example, the box 100 may further include a tray 1001, and a peripheral edge of the tray 1001 is separately connected to the edge beam 1002.

It will be noted that there may be four edge beams 1002, namely, a front edge beam, a rear edge beam, a left edge beam, and a right edge beam. The front edge beam, the rear edge beam, the left edge beam, the right edge beam, and the tray 1001 form a sealed box 100.

The battery cell module 400 is disposed in the box 100.

The power distribution box 300 may be disposed on an outer side of the edge beam 1002 of the box 100 that has the connection hole 1003, and is isolated from the battery cell module 400 by the edge beam 1002.

As an example, a power distribution component is disposed in the power distribution box 300. The power distribution component is configured to convert high-voltage direct current output from the battery cell module 400 into electric energy suitable for different parts of a vehicle and distribute the electric energy to various parts.

The busbar 200 passes through the connection hole 1003. One end of the busbar 200 is electrically connected to the battery cell module 400, and the other end of the busbar 200 is electrically connected to the power distribution box 300. The non-conductive sealing pressing plate 2003 is hermetically connected to the edge beam 1002.

Accordingly, the other end of the busbar 200 may be electrically connected to the power distribution component in the power distribution box 300.

As an example, there are two busbars 200 that are respectively connected to a main positive terminal and a main negative terminal of the battery cell module 400.

The battery pack 10 according to this embodiment of the present invention connects the battery cell module 400 to the power distribution box 300 by using the busbar 200. The busbar 200 is hermetically connected to the box 100, so that in case of battery thermal runaway, electrolyte and high-temperature mixed gases can be prevented from entering the power distribution box 300, thereby avoiding safety hazards such as short circuits in the power distribution box 300. The busbar 200 enables thermal and electrical separation of a battery area and a power distribution area, thereby improving safety of the battery pack 10.

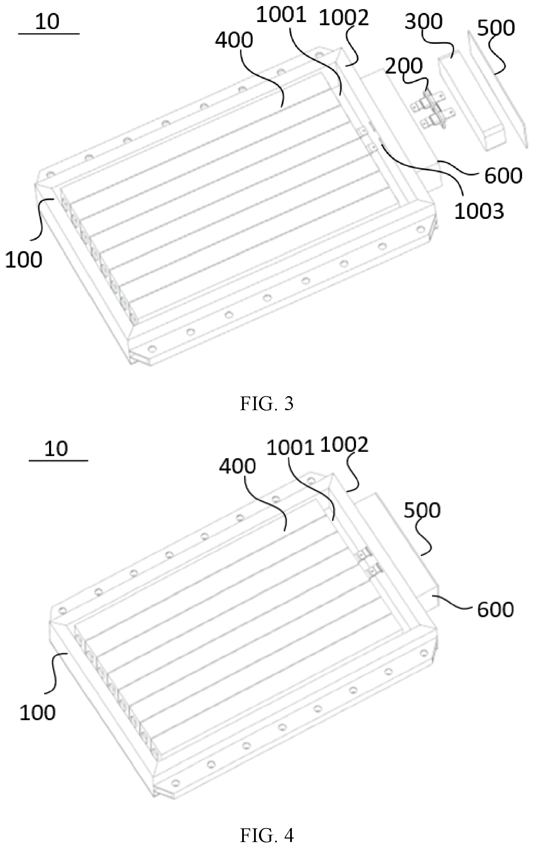

In some embodiments, as shown in FIG. 3 to FIG. 5, the battery pack 10 further includes a first seal cover 500 and a power distribution housing 600. The power distribution housing 600 includes a plurality of side plates, and the plurality of side plates enclose to form a first cavity with two opposite openings. The opening on one side of the power distribution housing 600 is hermetically connected to the edge beam 1002 having the connection hole 1003. The first seal cover 500 is hermetically connected to the opening on the other side of the power distribution housing 600. The power distribution box 300 is disposed in the power distribution housing 600.

As an example, the opening on one side of the power distribution housing 600 may be fixed to the edge beam 1002 having the connection hole 1003 through mechanical connection, and a connection position between the power distribution housing 600 and the edge beam 1002 may be further sealed with a sealing adhesive or a sealing strip. For example, the power distribution housing 600 may be mechanically connected to the edge beam 1002 by using a bolt or through welding.

As another example, the first seal cover 500 may be hermetically connected to the power distribution housing 600 by using a bolt, and a connection position between the first seal cover 500 and the power distribution housing 600 is provided with a sealing strip or coated with a sealing adhesive, to further improve a sealing effect.

In this embodiment, the power distribution housing 600 and the first seal cover 500 are added, so that moisture can be prevented from intruding into the power distribution box 300, thereby avoiding a problem such as a short circuit inside the power distribution box 300.

In some embodiments, the battery pack 10 further includes a second seal cover. The edge beam 1002 having the connection hole 1003 is provided with a second cavity. The connection hole 1003 is provided on one side of the second cavity. The power distribution box 300 is disposed in the second cavity, and the second seal cover is hermetically connected to a side of the second cavity that has an opening.

As an example, the second cavity may be formed through die-casting on the edge beam 1002 having the connection hole 1003. The second seal cover may be connected to the second cavity by using a bolt, and a connection position between the second seal cover and the second cavity is provided with a sealing strip or coated with a sealing adhesive, to further improve the sealing effect.

In this embodiment, the second cavity is disposed on the edge beam 1002 having the connection hole 1003 and the power distribution box 300 is disposed in the second cavity, so that integration of the battery pack 10 can be improved and a quantity of external sealing surfaces is reduced, thereby lowering a possibility of moisture intrusion into the power distribution box 300.

In some embodiments, the non-conductive sealing pressing plate 2003 includes a pressing plate end portion and a pressing plate main body. A surface of the pressing plate end portion is hermetically connected to a surface of the connection hole 1003, and a sealing surface of the pressing plate main body is hermetically connected to one side of the edge beam 1002.

Specifically, the pressing plate end portion may be hermetically connected to the connection hole 1003 by using a sealing adhesive, and a sealing strip is added to further improve the sealing effect. The pressing plate main body may be hermetically connected to the edge beam 1002 by using a bolt, or may be hermetically connected to the edge beam 1002 by using a sealing adhesive.

In this embodiment, the multi-layer sealing connection can prevent high-temperature mixed gases generated by the battery cell module 400 from entering the power distribution box 300.

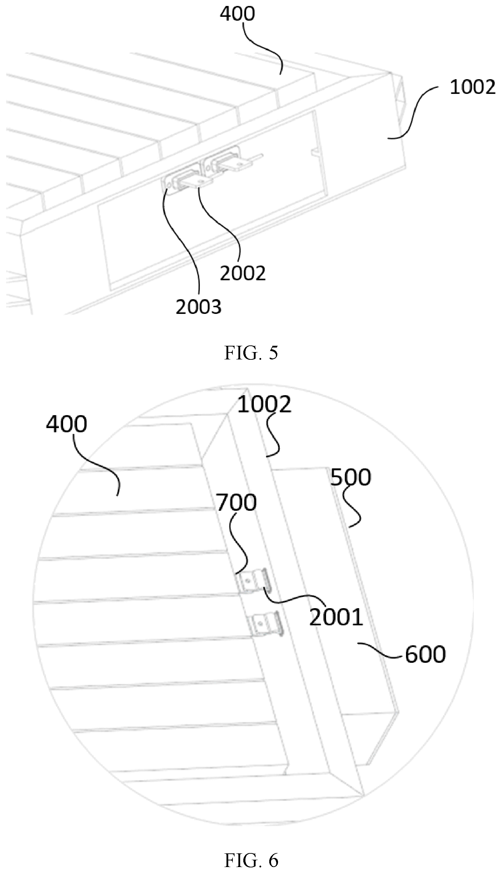

In some embodiments, as shown in FIG. 6, the battery pack 10 further includes a connecting sheet 700. One end of the busbar 200 is electrically connected to an electrode of the battery cell module 400 by using the connecting sheet 700.

It will be noted that a quantity of connecting sheets 700 is the same as a quantity of busbars 200.

In this embodiment, one end of the busbar 200 is electrically connected to the electrode of the battery cell module 400 by using the connecting sheet 700, which facilitates assembly of the battery pack 10. The connecting sheet 700 may be designed and manufactured based on an actual requirement, thereby improving installation flexibility.

Some details of the busbar 200 are described below with reference to FIG. 1. The busbar 200 includes the non-conductive sealing pressing plate 2003, a first connecting component 2001, and a second connecting component 2002. The first connecting component 2001 is disposed at a first end of the non-conductive sealing pressing plate 2003, and the second connecting component 2002 is disposed at a second end of the non-conductive sealing pressing plate 2003. The first connecting component 2001 is electrically connected to the second connecting component 2002.

As an example, the first connecting component 2001 passes through the connection hole 1003 to be connected to the electrode of the battery cell module 400, and the non-conductive sealing pressing plate 2003 is hermetically connected to the edge beam 1002.

It will be noted that a shape of the connection hole 1003 may be determined based on a shape of the non-conductive sealing pressing plate 2003 of the busbar 200.

Specifically, a junction of the first connecting component 2001 and the second connecting component 2002 is wrapped by the non-conductive sealing pressing plate 2003 to prevent loosening at a connection position between the first connecting component 2001 and the second connecting component 2002, which causes a problem such as arc discharge or rapid temperature rise in a local part of the first connecting component 2001 or second connecting component 2002.

Because the busbar 200 is mechanically connected to the power distribution box 300, when an abnormal connection (looseness or unreliable connection) occurs at a connection position between the busbar 200 and the power distribution component, contact resistance at the second connecting component 2002 increases. This may lead to a sharp temperature rise at the second connecting component 2002, which poses safety risks such as high-temperature arcing and ablation.

In some embodiments, as shown in FIG. 2, the busbar 200 further includes a temperature detection module 2004, fixedly connected to the second connecting component 2002 and configured to be connected to a battery management apparatus, for detecting a temperature of the busbar 200 to obtain a detection temperature.

The battery management apparatus is configured to receive the detection temperature to generate a warning signal when the detection temperature exceeds a preset temperature.

Specifically, the temperature detection module 2004 includes a thermistor. The thermistor is fixed to one side of the second connecting component 2002 for collecting a temperature of the busbar 200 in real time. When the detection temperature exceeds the preset temperature, the battery management apparatus sends the warning signal to a control system of a vehicle. The control system takes a corresponding safety measure based on a preset execution action to ensure normal and reliable operation of the battery pack 10.

It will be noted that reliability of the connection position between the busbar 200 and the power distribution component is closely related to a temperature change. When the temperature detection module 2004 is used to perform temperature detection, the reliability of the connection position between the busbar 200 and the power distribution component can be determined based on a temperature detected in real time.

In this embodiment, use of the temperature detection module 2004 can help protect the battery cell module 400 and another vehicle component from being damaged by temperature, thereby extending service life of the battery cell module 400 and the other vehicle component.

In some embodiments, a material of the first connecting component 2001 includes aluminum, a material of the second connecting component 2002 includes copper, and the non-conductive sealing pressing plate 2003 is one of a ceramic insulating plate, a modified engineering plastic plate, or a glass fiber reinforced engineering plastic plate.

Specifically, the busbar may be referred to as a copper-aluminum composite busbar. The copper-aluminum composite busbar may be manufactured by bonding copper and aluminum through EMPT (Electromagnetic Pulse Technology, electromagnetic pulse technology) welding or ultrasonic welding.

Preferably, nickel may be plated on a surface of the first connecting component 2001 to improve corrosion resistance of the first connecting component 2001.

In this embodiment, the copper-aluminum composite busbar has advantages such as light weightiness, corrosion resistance, and low production cost. In addition, a copper busbar is used to be connected to the power distribution box 300, so that a feature that the copper busbar is relatively soft is used to absorb a tolerance during assembly, thereby improving production efficiency and reliability during an assembly process. A high-temperature resistant ceramic insulating plate can effectively prevent high-temperature mixed gases generated in the battery area and ejected electrolyte from affecting the power distribution box 300. Modified engineering plastic or glass fiber reinforced engineering plastic has good insulation performance and high-temperature resistance performance, along with advantages such as relatively light weight, ease of processing, and lower cost. The modified engineering plastic or the glass fiber reinforced engineering plastic is used as a material of the non-conductive sealing pressing plate 2003, so that the non-conductive sealing pressing plate 2003 can be prevented from corrosion, ablation, and carbonization caused by electrolyte and high-temperature mixed gases, thereby avoiding damage to the power distribution box 300 from the high-temperature mixed gases and the electrolyte.

It will be noted that the first connecting component 2001 and the second connecting component 2002 may be formed as a whole, a material of which is one of soft copper, hard copper, or aluminum.

In some embodiments, a middle part of the first connecting component 2001 is bent to be V-shaped.

As an example, a bottom of the V-shaped bend may be a plane.

In this embodiment, the V-shaped bend of the first connecting component 2001 can absorb transient impact caused by deformation of the first connecting component 2001, which helps avoid a risk of fracture in the first connecting component 2001 and extends service life of the busbar 200.

In some embodiments, the non-conductive sealing pressing plate 2003 includes the pressing plate end portion and the pressing plate main body. The pressing plate end portion extends through the pressing plate main body, and the pressing plate end portion protrudes outward from the pressing plate main body. The pressing plate end portion wraps the junction between the first connecting component and the second connecting component.

Specifically, the surface of the pressing plate end portion is hermetically connected to the surface of the connection hole 1003, and the sealing surface of the pressing plate main body is hermetically connected to one side of the edge beam 1002.

As an example, the pressing plate end portion may be hermetically connected to the connection hole 1003 by using a sealing adhesive, and a sealing strip is added to further improve the sealing effect The pressing plate main body may be hermetically connected to the edge beam 1002 by using a bolt, or may be hermetically connected to the edge beam 1002 by using a sealing adhesive.

In this embodiment, multi-layer sealing connection can prevent high-temperature mixed gases generated by the battery cell module 400 from entering the power distribution box 300.

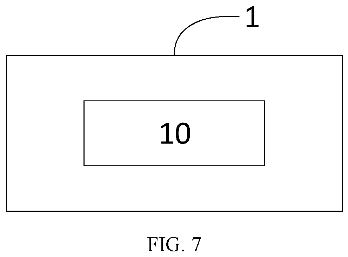

In addition, this application provides a vehicle. As shown in FIG. 7, a vehicle 1 includes any foregoing battery pack 10. The vehicle 1 may be specifically, for example but not limited to, a passenger car, a truck, or a special-purpose engineering vehicle.

The vehicle 1 according to this embodiment of the present invention can promptly take a corresponding measure when battery thermal runaway occurs, thereby avoiding damage to personnel in the vehicle and damage to another related module of the vehicle.

The present invention has been described by using the foregoing embodiments. However, it will be understood that the foregoing embodiments are merely used for example and description purposes, and are not intended to limit the present invention to the scope of the described embodiments. In addition, a person skilled in the art will understand that the present invention is not limited to the foregoing embodiments, and more variations and modifications may be made according to the teachings of the present invention. These variations and modifications fall within the protection scope claimed by the present invention. The protection scope of the present invention is defined by the appended claims and equivalents thereof.

## Claims

1. A busbar (200), wherein the busbar (200) comprises:
a non-conductive sealing pressing plate (2003);
a first connecting component (2001), disposed at a first end of the non-conductive sealing pressing plate (2003); and
a second connecting component (2002), disposed at a second end of the non-conductive sealing pressing plate (2003), wherein the first connecting component (2001) is electrically connected to the second connecting component (2002).

2. The busbar (200) according to claim 1, wherein the busbar (200) further comprises: a temperature detection module (2004), fixedly connected to the second connecting component (2002) and configured to be connected to a battery management apparatus, for detecting a temperature of the busbar (200) to obtain a detection temperature, wherein
the battery management apparatus is configured to receive the detection temperature to generate a warning signal when the detection temperature exceeds a preset temperature.

3. The busbar (200) according to claim 1 or 2, wherein a material of the first connecting component (2001) comprises aluminum, a material of the second connecting component (2002) comprises copper, and the non-conductive sealing pressing plate (2003) is one of a ceramic insulating plate, a modified engineering plastic plate, or a glass fiber reinforced engineering plastic plate.

4. The busbar (200) according to claim 3, wherein a middle part of the first connecting component (2001) is bent to be V-shaped.

5. The busbar (200) according to any one of claims 1 to 4, wherein the non-conductive sealing pressing plate (2003) comprises a pressing plate end portion and a pressing plate main body, the pressing plate end portion extends through the pressing plate main body, and the pressing plate end portion protrudes outward from the pressing plate main body; and
the pressing plate end portion wraps a junction between the first connecting component (2001) and the second connecting component (2002).

6. A battery pack (10), comprising:
a box (100), comprising an edge beam (1002), wherein the edge beam (1002) is provided with a through connection hole (1003);
a battery cell module (400), provided in the box (100);
a power distribution box (300); and
the busbar (200) according to any one of claims 1 to 5, wherein the busbar (200) passes through the connection hole (1003), one end of the busbar (200) is electrically connected to the battery cell module (400), the other end of the busbar (200) is electrically connected to the power distribution box (300), and the non-conductive sealing pressing plate (2003) is hermetically connected to the edge beam (1002).

7. The battery pack (10) according to claim 6, wherein the battery pack (10) further comprises a power distribution housing (600) and a first seal cover (500);
the power distribution housing (600) comprises a plurality of side plates, the plurality of side plates enclose to form a first cavity with two opposite openings, and the opening on one side of the power distribution housing is hermetically connected to the edge beam (1002) having the connection hole (1003);
the first seal cover (500) is hermetically connected to the opening on the other side of the power distribution housing (600); and
the power distribution box (300) is disposed in the power distribution housing (600).

8. The battery pack (10) according to claim 6 or 7, wherein the battery pack (10) further comprises a second seal cover; and
the edge beam (1002) having the connection hole (1003) is provided with a second cavity, the connection hole (1003) is provided on one side of the second cavity, the power distribution box (300) is disposed in the second cavity, and the second seal cover is hermetically connected to a side of the second cavity that has an opening.

9. The battery pack (10) according to any one of claims 6 to 8, wherein the non-conductive sealing pressing plate (2003) comprises the pressing plate end portion and the pressing plate main body, a surface of the pressing plate end portion is hermetically connected to a surface of the connection hole (1003), and a sealing surface of the pressing plate main body is hermetically connected to one side of the edge beam (1002).

10. A vehicle (1), comprising the battery pack (10) according to any one of claims 6 to 9.
